# EUROPEAN PATENT APPLICATION

(11) **EP 1 189 390 A2**
(43) Date of publication of application: **20.03.2002**
(21) Application number: 01302817.0
(22) Date of filing: 27.03.2001
(51) Int. Cl.: H04L 12/28

(54) **Method system and means for control information management**

(30) Priority: 14.09.2000 JP 2000280696
(71) Applicant: FUJITSU LIMITED, Kawasaki-shi, Kanagawa 211-8588 (JP)
(72) Inventor: Takae, Naohito, Nakahara-ku, Kawasaki-shi, Kanagawa 211 (JP); Tani, Hiroyuki, Obihiro-shi, Hokkaido, 080-0037 (JP); Hanada, Saiko, Nogi, Aomori-shi, Aomori, 030-0192 (JP)
(74) Representative: Fenlon, Christine Lesley

(57) **Abstract**

The present invention provides a control information management method, a control object controlling method, a recording medium, a control information management server, and a control information management system, by any one of which registered information can be collectively managed and altered in accordance with alteration information, and a control object can be controlled in accordance with control information. The control information management system (1) of the present invention includes a control information management server (10) and a household appliance control device (14). The control information management server (10) produces control information for controlling control objects in compliance with an instruction from a user, collects alteration information for altering the control information, alters the control information in accordance with the alteration information, and transmits the control information via a communication network. The household appliance control device (14) receives the transmitted control information, selects one of the control objects (15) corresponding to the received control information, and controls the selected one of the control objects in accordance with the received control information.

## Description

### BACKGROUND OF THE INVENTION

### 1. Field of the Invention

The present invention generally relates to control information management methods, control object control methods, recording media, control information management servers, and control information management systems. More particularly, the present invention relates to a control information management method, a control object control method, a recording medium, a control information management server, and a control information management system for collectively managing control information and controlling control objects.

### 2. Description of the Related Art

As a remote control system for household appliances, a remote control system disclosed in Japanese Laid-Open Patent Application No. 2000-59867 is known. In this remote control system, electronic mail exchanged via the Internet is used as an information transmission means, so that operation control information for controlling operations of household appliances located in remote areas can be transmitted to the household appliances.

Conventionally, a user utilizes such a remote control system to transmit operation control information to household appliances such as video tape recorders and air conditioners, thereby remote-controlling those household appliances.

In the conventional remote control system, however, when a user remote-controls a video recorder to make a recording reservation, the desired program might not be completely recorded due to an unexpected prolongation of the broadcast time of a sports event or a sudden cancellation of a program when a bit news is broadcast.

Also, in a case where a control reservation is made so as to perform a remote control operation, with a lapse of time being the control condition, even if the need to perform the remote control operation is eliminated by external factors such as weather, temperature or humidity, the remote control operation is still duly performed at the predetermined time according to the control reservation.

In a case where a control reservation is made by remote controlling household appliances, it is difficult to collect information based on external factors such as weather, temperature, and humidity.

Alternatively, it is possible to transmit e-mail through the Internet and analyze the operation control information contained in the e-mail. The analyzed operation control information can be used for controlling household appliances. In this case, however, every household needs to own a control apparatus such as a personal computer.

### SUMMARY OF THE INVENTION

A general object of the present invention is to provide control information management methods, control object controlling methods, recording media, control information management servers, and control information management systems, in which the above disadvantages are eliminated.

A more specific object of the present invention is to provide a control information management method, a control object controlling method, a recording medium, a control information management server, and a control information management system, by any of which registered control information can be collectively managed and altered in accordance with alteration information, and a control object can be controlled in accordance with control information.

To achieve the above objects, the present invention is characterized by producing control information for controlling a control object in compliance with an instruction from a user, collecting alteration information for altering the control information, altering the control information in accordance with the alteration information, and controlling a control object in accordance with the control information.

In this manner, the alteration information for altering the control information is collected so as to detect the control information that needs to be altered. Thus, the control information can be altered in accordance with the alteration information. The altered control information is then transmitted to a control object, so that a desired control operation can be performed on the control object.

Also, the present invention is characterized by producing control information for controlling a control object in compliance with an instruction from a user, collecting check information for checking a control condition contained in the control information, checking whether or not the control condition is satisfied in accordance with the check information, and controlling a control object in accordance with the control information based on a check result of the control condition.

In this manner, the check information for checking a control condition is collected so as to detect the control information that satisfy the control information. The detected control information is then transmitted to a control object, so that a desired control operation can be performed on the control object.

The above and other objects and features of the present invention will become more apparent from the following description taken in conjunction with the accompanying drawings.

### BRIEF DESCRIPTION OF THE DRAWINGS

FIG. 1 shows the structure of a control information management system in accordance with the present invention;
FIG. 2 shows the structure of a computer system that embodies a control information management server;
FIG. 3 shows the structure of a household appliance control device in accordance with the present invention;
FIG. 4 is a flowchart of a recording reservation process performed by the control information management system;
FIG. 5 shows a program selection screen in accordance with the present invention;
FIG. 6 shows a recording device selection screen in accordance with the present invention;
FIG. 7 shows an alteration notification confirmation in accordance with the present invention;
FIG. 8 shows the structure of an example of reservation information;
FIG. 9 is a flowchart of a reservation information alteration operation performed by the control information management system in accordance with the present invention;
FIG. 10 shows an example of a reservation condition selection screen in accordance with the present invention;
FIG. 11 shows an example of a temperature selection screen in accordance with the present invention; and
FIG. 12 shows the structure of another example of reservation information in accordance with the present invention.

### DESCRIPTION OF THE PREFERRED EMBODIMENTS

The following is a description of embodiments of the present invention, with reference to the accompanying drawings. In the following description, a control information management system that collectively manages control information used for controlling household appliance, and also controls the household appliance will be described. However, the control information may not be limited to the control information for household appliance, and may be control information for controlling other electric equipment and facilities, such as a greenhouse.

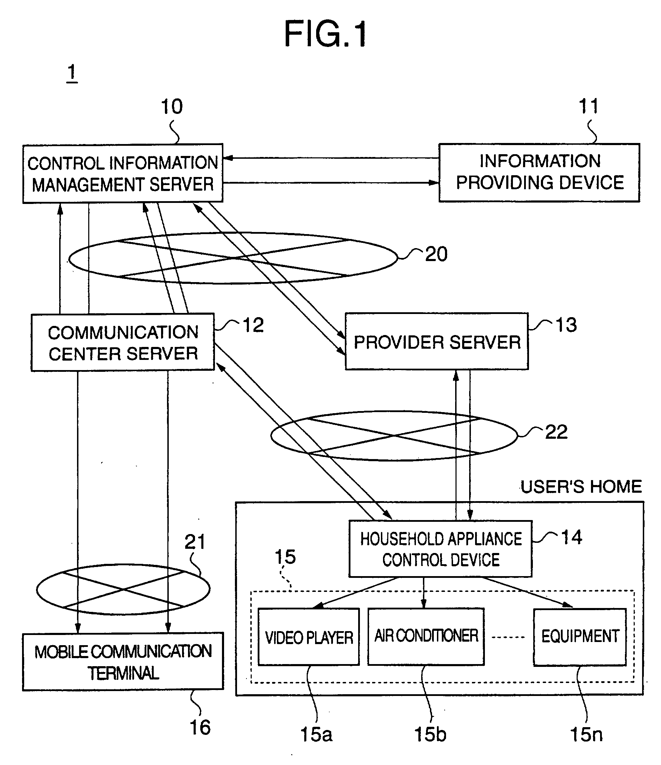

FIG. 1 shows the structure of one embodiment of the control information management system of the present invention. This control information management system 1 comprises a control information management server 10, an information providing device 11, a communication center server 12, a provider server 13, a household appliance control device 14, household appliances as controlled objects 15, a mobile communication terminal 16, a communication network 20 such as the Internet, a communication network 21 containing a mobile communication network, and a communication network 22 containing a general public network. The household appliances 15 include a video player 15a, an air conditioner 15b, and other equipment 15n.

The control information management server 10 is owned by a household appliance control agent, for instance, and collectively manages control information for controlling the household appliances 15, which a user has registered. The information providing device 11 is owned by an information provider such as a television station or the Meteorological Agency, and provides the control information management server 10 with various information necessary for managing the control information. The information providing device 11 may also provides the control information management server 10 with the various information via the communication network 20, or through a telephone line, facsimile, or broadcasting.

The communication center server 12 is connects the mobile communication terminal 16 used by a user or the household appliance control device 14 installed at the user's home, to the communication network 20. While being connected to the control information management server 10 via the communication network 20, the communication center server 12 is connected to the communication network 21 and the communication network 22. The mobile communication terminal 16 used by a user is connected to the control information management server 10 via the communication network 21, the communication center server 12, and the communication network 20.

The provider server 13 is owned by an Internet provider or the like that provides a service for making a connection with a communication network such as the Internet. The provider server 13 connects the household appliance control device 14 installed at a user's home to the communication network 20. While being connected to the control information management server 10 via the communication network 20, the provider server 13 is connected to the communication network 22. The household appliance control device 14 installed at a user's home is connected to the control information management server 10 via the communication network 22, the communication center server 12, and the communication network 20, or via the communication network 22, the provider serer 13, and the communication network 20.

The household appliance control device 14 is connected to the household appliances 15 located at a user's home by wire connection or wireless connection, and controls the household appliances 15 in accordance with the control information supplied from the control information management server 10. The household control device 14 controls not only the household appliances 15 but also other electric equipment and facilities. The communication networks 20 to 22 shown in FIG. 1 may be a common communication network.

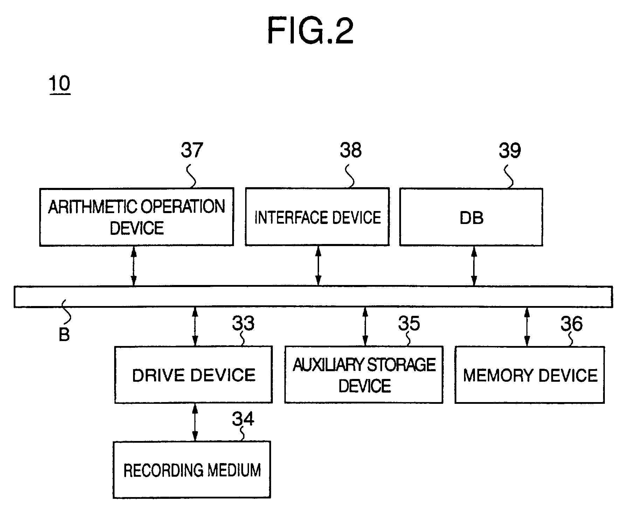

FIG. 2 shows the structure of a computer system that embodies the control information management server 10. As shown in FIG. 2, this computer system comprises a drive device 33, a recording medium 34, an auxiliary storage device 35, a memory device 36, an arithmetic operation device 37, an interface device 38, and a database 39, all of which are interactively connected by a bus B.

The interface device 38 is an interface for connecting the computer system to the communication network 20, and constituted by a modem or the like. In the control information management server 10, the database 39 stores various necessary data such as control information, reservation information, program information, weather information.

A program concerning the control information management server 10 is provided by the recording medium 34, such as a CD-ROM. The recording medium 34 on which the program concerning the control information management server 10 is set to the drive device 33, so that the program is installed from the recording medium 34 into the auxiliary storage device 35 via the drive device. The auxiliary storage device 35 stores the installed program as well as necessary files and data.

The memory device 36 reads out the program from the auxiliary storage device 35 at the time of the start of the computer system, and stores the read-out program. The arithmetic operation device 37 performs an operation concerning the control information management server 10 in accordance with the stored read-out program.

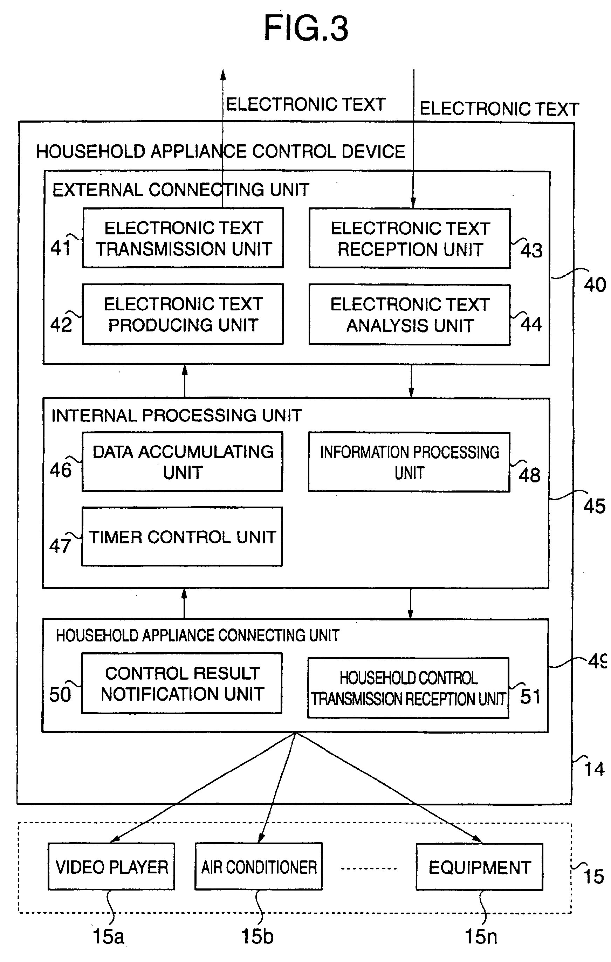

FIG. 3 shows the structure of an example of the household appliance control device 14. As shown in FIG. 3, the household appliance control device 14 comprises an external connecting unit 40, an internal processing unit 45, and a household connecting unit 49. The external connecting unit 40 comprises an electronic text transmission unit 41 that transmits an electronic text such as e-mail, an electronic text producing unit 42 that produces an electronic text, an electronic text reception unit 43 that receives an electronic text, and an electronic text analysis unit 44 that analyzes the contents of a received electronic text.

The internal processing unit 45 comprises a data accumulating unit 46 that accumulates various data such as control information supplied, a timer control unit 47 that controls a timer, and an information processing unit 48 that processes the control information supplied from the external connecting unit 40 in such a manner that the control information becomes compatible with the household appliances 15. The household appliance connecting unit 49 transmits control information to the household appliances 15, and comprises a household control transmission reception unit 51 that receives control result information transmitted from the household appliances 15, and a control result notification unit 50 that notifies the internal processing unit 45 of the control result information in accordance with the control results.

The household control device 14 selects one of the household appliances 15 in accordance with the received control information, and transmits the control information to the selected one of the household appliances 15, thereby controlling the selected one of the household appliances 15. The household appliance control device 14 then checks the control results of the household appliances 15, and transmits an electronic text according to the control results to the control information management server 10.

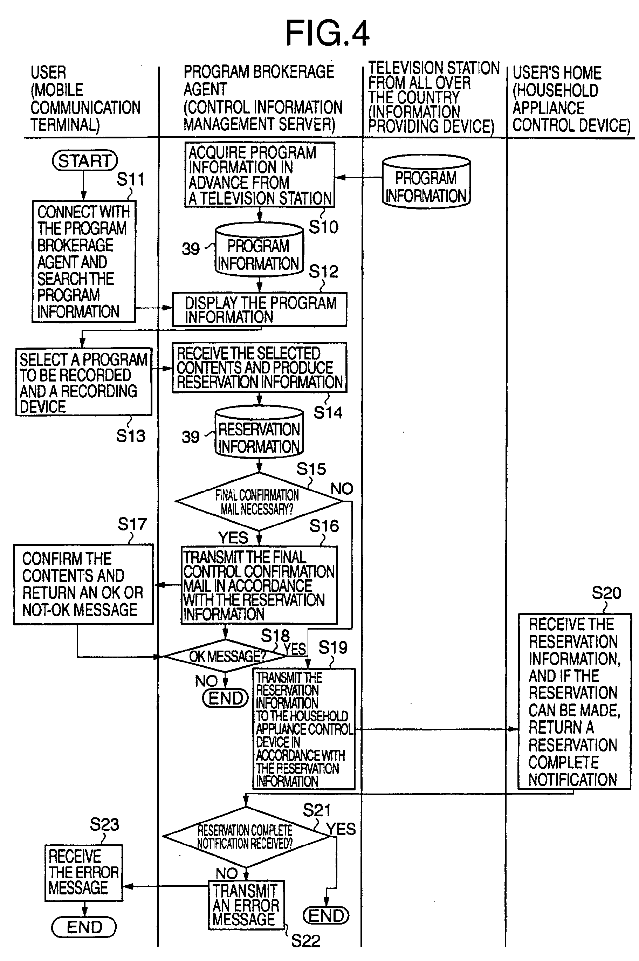

In the following, a recording reservation process of the video player 15a located at a user's home will be described in detail as one example of an operation performed by the control information management system 1. FIG. 4 is a flowchart of a recording reservation process performed by the control information management system 1.

In step S10 in FIG. 4, a program brokerage agent or the like as a household appliance control agent acquires program information in advance from television stations from all over the country, and stores the program information. For instance, the control information management server 10 owned by the program brokerage agent or the like requests for the program information from the information providing device 11 owned by each of the television stations from all over the country, and stores the program information supplied from the information providing device 11 in the database 39.

In step S11, the user connects the mobile communication terminal 16 to the control information management server 10, thereby transmitting a search request for the program information stored in the control information management server 10. The operation moves on to step S12, in which the control information management server 10 transmits the program information to the mobile communication terminal 16 in accordance with the received search result, and displays the program information on the screen of the mobile communication terminal 16.

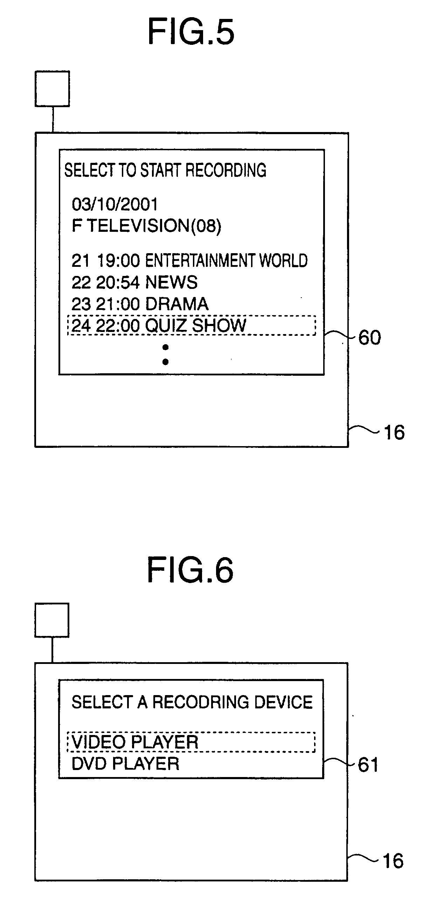

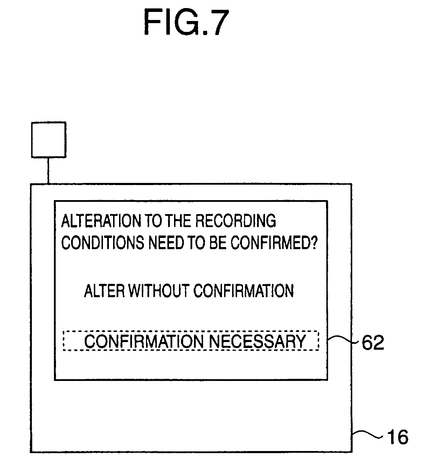

In step S13, the user utilizes the information, such as information shown in FIGS. 5 to 7, displayed on the screen of the mobile communication terminal 16, so as to select a recording program and a recording device for recording reservation. FIG. 5 shows a program selection screen. FIG. 6 shows a recording device selection screen. FIG. 7 shows an alteration notification check screen.

A user first sets the date and channel of a program to be recorded, so that a program selection screen 60 is displayed on the display unit of the mobile communication terminal 16, as shown in FIG. 5. The user then selects a program from the program selection screen 60. On the program selection screen 60, the programs to be broadcast by F television on March 10, 2001, and the program "Quiz Show" is selected by the user.

After the selection of a program to be recorded, the control information management server 10 displays a recording device selection screen 61 on the display unit of the mobile communication terminal 16, as shown in FIG. 6. The recording devices shown on the recording device selection screen 61 are devices having recording functions among the household appliances 15 installed at the user's home, and have been registered in the control information management server 10 in advance. The user then selects a recording device from the recording device selection screen 61 shown in FIG. 6.

After the selection of a recording device, the control information management server 10 displays an alteration notification confirmation screen 62 on the display unit of the mobile communication terminal 16, as shown in FIG. 7. An alteration notification is issued to confirm an alteration to be made to the reservation conditions such as the broadcast time and date of each program. The user determines whether or not the alteration notification needs to be confirmed. Although not shown in FIG. 7, the control information management server 10 displays a final confirmation notification screen, and lets the user determine whether or not the final confirmation notification is required.

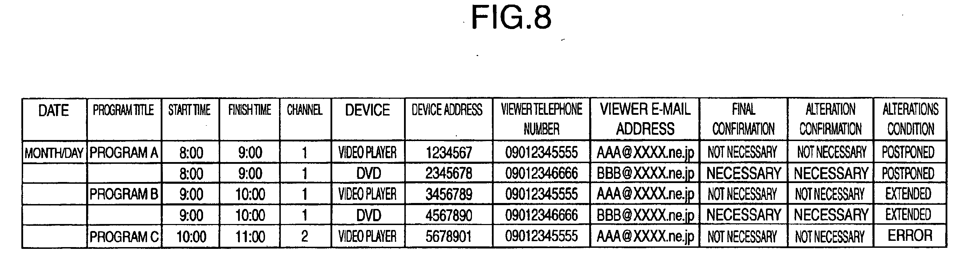

The control information management server 10 produces reservation information shown in FIG. 8 in accordance with the information selected on the screens shown in FIGS. 5 to 7, and stores the reservation information in the database 39. FIG. 8 shows the structure of an example of reservation information. The reservation information shown in FIG. 8 includes data such as "date", "program title", "start time", "finish time", "channel", "device", "device address", "viewer telephone number", "viewer e-mail address", "final confirmation", "alteration confirmation", and "altered condition".

The "date" contained in the reservation information indicates the broadcast date of each program to be recorded. The "program title" indicates the title of each program to be recorded. The "start time" indicates the start time of each program to be recorded. The "finish time" indicates the finish time of each program to be recorded. The "channel" indicates the channel through which each program to be recorded is broadcast. The "device" indicates a recording device to be used. The "device address" indicates the device address of each recording device to be controlled by the control information. As such a device address, an IP address may be used, for instance. The "device" and "device address" are obtained from each user at the time of contract or a change of the household appliances 15, and stored in the database 39.

The "viewer telephone number" indicates the telephone number of each user that has registered the reservation information, and is used for identifying the user at the time of charge collection. Here, "credit card number" may be used instead of the "viewer telephone number". The "viewer E-MAIL" indicates the mail address of each user that has registered the reservation information. The "final confirmation" indicates whether or not a final confirmation notification is required. The "alteration notification" indicates whether or not an alteration confirmation notification is required. The "altered condition" indicates the altered result of each reservation condition.

In step S15, the control information management server 10 refers to the "final confirmation" in the reservation information shown in FIG. 8, and determines whether or not a final confirmation notification needs to be sent to the user. If it is determined that the final confirmation notification needs to be sent to the user ("YES" in step S15), the operation moves on to step S16. In step S16, the control information management server 10 transmits the final confirmation notification to the mobile communication terminal in accordance with the reservation information. In step S17, the user checks the contents of the final confirmation notification received through the mobile communication terminal 16, and returns an OK message for controlling the video player 15a or a not-OK message for not controlling the video player 15a in accordance with the reservation information.

In step S18, the control information management server 10 checks whether or not a reply from the user indicates "OK". If it is determined that the reply from the user does not indicate "OK" ("NO" in step S18), the operation comes to an end. If it is determined that the reply from the user indicates "OK" ("YES" in step S18) or that the final confirmation notification does not need to be sent to the user ("NO" in step S15), the operation moves on to step S19. In step S19, the control information management server 10 transmits the reservation information to the household appliance control device 14 at the user's home.

In step S20, the household appliance control device 14 makes a recording reservation in the video player 15a in accordance with the received reservation information. Depending on the type of each of the household appliances 15, the household appliance control device 14 transmits the reservation information in advance, or controls each of the household appliances 15 in accordance with the reservation information. After completing the recording reservation in accordance with the received reservation information, the household appliance control device 14 returns a reservation complete notification to the control information management server 10.

In step S21, the control information management server 10 determines whether or not the reservation complete notification is received within a predetermined period of time since the transmission of the reservation information to the household appliance control device 14. If it is determined that the reservation complete notification has been received ("YES" in step S21), the control information management server 10 ends the operation. If it is determined that the reservation complete notification has not been received ("NO" in step S21), the control information management server 10 transmits an error message to the mobile communication terminal 16.

In step S23, the user checks the contents of the error message received by the mobile communication terminal 16, and recognizes that the recording reservation has not been made. If no reservation complete notification is returned from the household appliance control device 14, there is a possibility of trouble or power failure in the household appliance control device 14 or the household appliances 15. Such trouble or power failure can be notified through an error message.

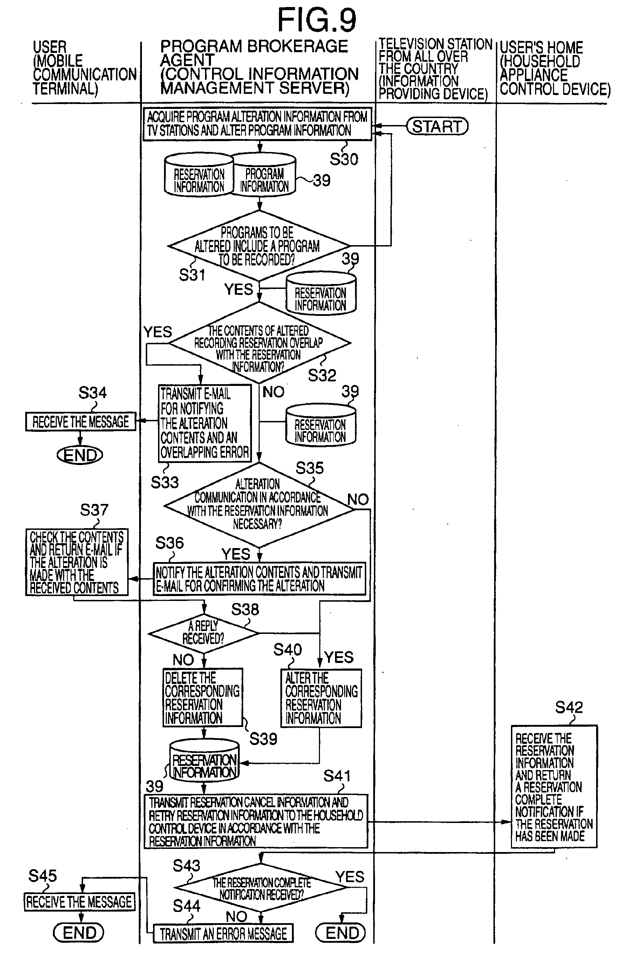

Next, an operation performed by the control information management system 1 when the broadcast date of a program to be recorded is changed will be described. FIG. 9 is a flowchart of a reservation information alteration operation performed by the control information management system 1.

In step S30 in FIG. 9, a program brokerage agent acquires program alteration information from television stations from all over the country at predetermined time intervals (every 3 minutes, for instance), and, in accordance with the program alteration information, the program information is altered. More specifically, the control information management server 10 requests the information providing device 11 to transmit the program alteration information. In accordance with the program alteration information supplied from the information providing device 11, the control information management server 10 alters the program information stored in the database 39.

In step S31, the control information management server 10 checks whether or not the alteration information concerns a program that has been reserved for recording by the user. If it is determined that the alteration information does not concern the program reserved by the user ("NO" in step S31), the operation returns to step S30. If it is determined that the alteration information concerns the program reserved for recording by the user ("YES" in step S31), the control information management server 10 checks whether or not the contents of the recording reservation after the alteration overlap with the contents of the reservation information.

If it is determined that the contents of the recording reservation after the alteration overlap with the contents of the reservation information ("YES" in step S32), the control information management server 10 notifies the user of the altered contents of the recording reservation and the occurrence of an overlapping error in the recording reservation. The user then requests for an alteration to be made to the recording reservation. In step S34, the user receives an e-mail, through the mobile communication terminal 16, that describes the altered contents of the recording reservation and an overlapping error to be caused in the recording reservation. By this e-mail, the user recognizes the need to alter the recording reservation.

If it is determined that the contents of the recording reservation after the alteration do not overlap with the contents of the reservation information ("NO" in step S32), the operation moves on to step S35. In step S35, the control information management server 10 refers to the "alteration confirmation" in the reservation information, and determines whether or not an alteration confirmation notification is required. If it is determined that the alternation confirmation notification is necessary ("YES" in step S35), the operation moves on to step S36. In step S36, the control information management server 10 transmits the alteration confirmation notification including the altered contents of the recording reservation to the mobile communication terminal 16. When the user permits the alteration in the recording reservation, the control information management server 10 requests for a reply allowing the alteration to be made to the recording reservation.

In step S37, the user checks the contents of the alteration confirmation received through the mobile communication terminal 16. If the contents of the recording reservation should be altered, the user sends a reply to the control information management server 10. In step S38, the control information management server 10 determines whether or not a reply has been sent from the user. If it is determined that no reply has been sent from the user ("NO" in step S38), the operation moves on to step S39. In step S39, the control information management server 10 deletes the corresponding recording reservation from the reservation information.

On the other hand, if it is determined that no alteration confirmation notification is necessary ("NO" in step S35) or that a reply has been sent from the user ("YES" in step S38), the operation moves on to step S40. In step S40, the control information management server 10 alters the corresponding recording reservation in the reservation information.

In step S41, the control information management server 10 transmits reservation cancel information or retry reservation information to the household appliance control device 14 at the user's home, in accordance with the reservation information. In step S42, the household appliance control device 14 cancels the recording reservation that has already been registered in accordance with the received reservation cancel information, and makes a recording reservation in the video player 15a in accordance with the retry reservation information. After completing the recording reservation in accordance with the received retry information, the household appliance control device 14 returns a reservation complete notification to the control information management server 10.

In step S43, the control information management server 10 checks whether or not the reservation complete notification is received within a predetermined period of time since the transmission of the reservation cancel information and the retry reservation information. If it is determined that the reservation complete notification has been received ("YES" in step S43), the control information management server 10 ends the operation. If it is determined that the reservation complete notification has not been received ("NO" in step S43), the operation moves on to step S44. In step S44, the control information management server 10 transmits an error message to the mobile communication terminal 16.

In step S45, the user checks the contents of the error message received by the mobile communication terminal 16, and recognizes that the alteration to the recording reservation has failed. If no reservation complete notification is returned from the household appliance control device 14, there is a possibility of trouble or power failure of the household appliance control device 14 and the household appliances 15. Such trouble or power failure may be notified through the error message.

In the above description, the video player 15a located at the user's home is controlled by the operation of the control information management system 1. However, the same operation may be performed to control other various household appliances, electric equipment, and electric facilities, such as air conditioners and greenhouses.

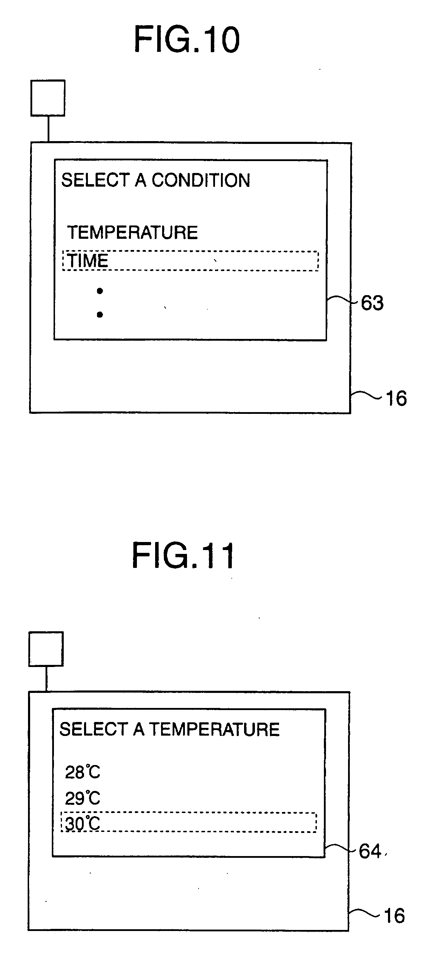

When controlling an air conditioner, weather information is acquired from the Meteorological Agency as an information provider. A user then connects the mobile communication terminal 16 to the control information management server 10, and selects a reservation condition for controlling the air conditioner through the displays shown in FIGS. 10 and 11 on the mobile communication terminal 16.

FIG. 10 shows an example of a reservation condition selection screen. FIG. 11 shows an example of a temperature selection screen. If the cooling function of the air conditioner is started at a temperature of 30 °C, a reservation condition selection screen 63 shown in FIG. 10 is displayed on the display unit of the mobile communication terminal 16, and a desired reservation condition is selected from the reservation condition selection screen 63. When the user selects "temperature" as a reservation condition from the reservation condition selection screen 63, a temperature selection screen 64 shown in FIG. 11 is displayed on the display unit of the mobile communication terminal 16. The user then selects "30 °C" from the temperature selection screen 64, thereby setting the reservation condition.

In a case where a control operation is performed for opening and closing the ceiling or the windows of a greenhouse, weather information is acquired from the Meteorological Agency as an information provider. The user then connects the mobile communication terminal 16 to the control information management server 10, and selects a reservation condition for controlling the open and close of the ceiling or the windows through the mobile communication terminal 16.

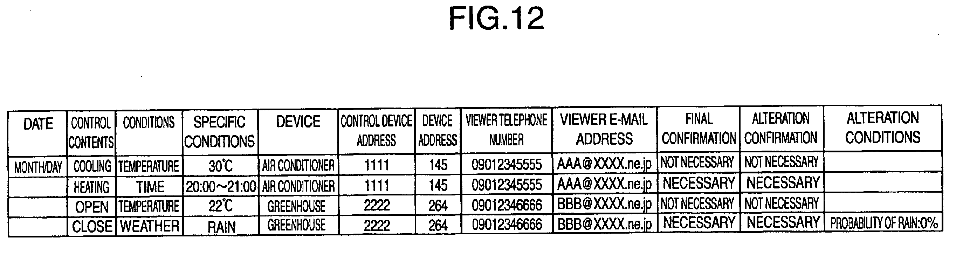

The control information management server 10 produces reservation information shown in FIG. 12, in accordance with the information selected through the screens shown in FIGS. 11 and 12, and stores the reservation information in the database 39, for instance. FIG. 12 shows the structure of another example of reservation information. The reservation information shown in FIG. 12 includes data such as "date", "control contents", "condition", "specific condition", "device", "control device address", "device address", "viewer telephone number", "viewer E-MAIL", "final confirmation", "alteration confirmation", and "alteration condition".

The "date" in the reservation information indicates the date on which an air conditioner, for instance, is controlled. The "control contents" indicates the contents of the control operation to be performed on the air conditioner. The "specific condition" indicates the specific information of reservation conditions for the air conditioner. The "device" indicates the device that performs the control operation on the air conditioner. The "control device address" indicates the address of the household appliance control device 14. The "device address" indicates the device address of the air conditioner to be controlled in accordance with control information. The remaining items, which are "viewer telephone number", the "viewer E-MAIL", the "final confirmation", the "alteration confirmation", and the "alteration condition", are the same as in the reservation information shown in FIG. 8.

The control information management server 10 acquires weather information from the Meteorological Agency as an information provider. If there is reservation information that satisfies the reservation condition, the control information management server 10 controls the air conditioner in accordance with the reservation information. More specifically, if there is reservation information that satisfies the reservation condition, the control information management server 10 transmits the reservation information to the household appliance control device 14, so that the air conditioner can be controlled under the reservation condition.

As described above, in the control information management system 1 of the present invention, a household appliance control agent collectively manages the control information of each user. Even if an alteration needs to be made to reservation information, the reservation conditions can be altered in accordance with the altered reservation information. Also, since the control information management system 1 of the present invention collects information from information providers, a control operation can be performed on household appliances, electric equipment, and electric facilities, when the reservation conditions contained in the reservation information are satisfied. Further, each user connects the mobile communication terminal 16 to the control information management server 10, thereby easily checking the reservation information.

Since a household appliance control agent collectively mange the reservation information of each user, a new service can be provided based on the reservation information. For instance, each user's liking is analyzed from the reservation information of the past, so that a program brokerage agent can provide information of programs that matches each user's liking and taste, or can even suggest which programs should be recorded.

The present invention is not limited to the specifically disclosed embodiments, but variations and modifications may be made without departing from the scope of the present invention.

The present application is based on Japanese priority application No. 2000-280696, filed on September 14, 2000, the entire contents of which are hereby incorporated by reference.

## Claims

1. A method of managing control information in a control information management server that collectively manages control information for controlling control objects, the method comprising the steps of:
producing the control information in compliance with an instruction from a user;
collecting alteration information for altering the control information;
altering the control information based on the alteration information; and
controlling the control an object in accordance with the altered control information.

2. The method as claimed in claim 1, wherein the control information altering step includes the step of:
collecting alteration information that is necessary for altering the control information;
requesting for permission to alter the control information after notifying a user that the control information needs to be altered based on the collected alteration information; and
altering the control information upon receipt of the permission from the user.

3. The method as claimed in claim 1, wherein the control object controlling step includes the steps of:
requesting for permission to alter the control information after notifying the user that the control information be transmitted to the control object; and
transmitting the control information to the control object upon receipt of transmission permission from the user.

4. The method as claimed in claim 1, further comprising the step of notifying the user of an abnormal state of the control object, when no control information reception acknowledgement is sent from the control objet after the transmission of the control information to the control object.

5. A method of managing control information in a control information management server that collectively manages control information used for controlling a control object, the method comprising the steps of:
producing the control information in accordance with an instruction from a user;
collecting check information for checking a control condition contained in the control. information;
checking whether or not the control condition is satisfied based on the check information; and
controlling a control object in accordance with the control information based on a check result of the control condition.

6. A method of controlling a control object in a control object controlling device that controls a control object in accordance with control information, the method comprising the steps of:
collecting alteration information for altering the control information on a transmission side;
receiving the control information altered based on the alteration information;
selecting a control object corresponding to the received information; and
controlling the selected control object in accordance with the received control information.

7. A method of controlling a control object in a control object controlling device that controls a control object in accordance with control information, the method comprising the steps of:
collecting check information for checking a control condition contained in the control information on a transmission side;
receiving the control information transmitted in accordance with a check result by the check information;
selecting a control object corresponding to the received control information; and
controlling the selected control object in accordance with the received control information.

8. A recording medium that can be read by a computer and stores a program for enabling a computer to perform an operation in a control information management server that collectively manages control information for controlling a control object, the program comprising:
a control information producing procedure for producing the control information in compliance with an instruction from a user; and
a control information alteration procedure for collecting alteration information used for altering the control information, and alters the control information in accordance with the alteration information.

9. A recording medium that can be read by a computer and stores a program for enabling a computer to perform an operation in a control information management server that collectively manages control information for controlling a control object, the program comprising:
a control information producing procedure for producing the control information in compliance with an instruction from a user; and
a control condition check procedure for collecting check information for checking a control condition contained in the control information, and checks whether or not the condition is satisfied based on the check information,
the program controlling the control object in accordance with the control information based on a check result of the control condition.

10. A recording medium that can be read by a computer and stores a program for enabling a computer to perform an operation in a control object controlling device that controls a control object in accordance with control information, the program comprising:
a control information reception procedure for collecting alteration information for altering the control information on a transmission side, and receives the control information altered based on the alteration information;
a control procedure for selecting a control object corresponding to the received control information, and controls the selected control object in accordance with the received control information.

11. A recording medium that can be read by a computer and stores a program for enabling a computer to perform an operation in a control object controlling device that controls a control object in accordance with control information, the program comprising:
a control information reception procedure for collecting check information used for checking a control condition contained in the control information on a transmission side, and receiving the control information transmitted based on a check result by the check information; and
a control procedure for selecting a control object corresponding to the received control information, and controls the selected control object in accordance with the received control information.

12. A control information management server that collectively manages control information for controlling a control object, the control information management server comprising:
a control information producing unit that produces the control information in compliance with an instruction from a user; and
a control information alteration unit that collects alteration information for altering the control information, and alters the control information in accordance with the alteration information,
the control information management server controlling the control object in accordance with the control information.

13. A control information management server that collectively manages control information for controlling a control object, the control information management server comprising:
a control information producing unit that produces the control information in compliance with an instruction from a user; and
a control condition check unit that collects check information used for checking a control condition contained in the control information, and checks from the check information whether or not the control condition is satisfied,
the control information management server controlling a control object in accordance with the control information based on a check result of the control condition.

14. A control information management system that collectively manages control information for controlling a control object, the control information management system comprising:
a control information producing unit that produces the control information in compliance with an instruction from a user;
a control information alteration unit that collects alteration information for altering the control information, and alters the control information in accordance with the alteration information;
a control information transmission unit that transmits the control information via a network;
a control information reception unit that receives the transmitted control information; and
a control unit that selects a control object corresponding to the received control information, and controls the selected control object in accordance with the received control information.

15. A control information management system that collectively manages control information for controlling a control object, the control information management system comprising:
a control information producing unit that produces the control information in compliance with an instruction from a user;
a control condition check unit that collects check information used for checking a control condition contained in the control information, and checks whether or not the control condition is satisfied based on the check information;
a control information transmission unit that transmits the control information via a network, based on a check result of the control condition;
a control information reception unit that receives the transmitted control information; and
a control unit that selects a control object corresponding to the received control information, and controls the selected control object in accordance with the received control information.
